# EUROPEAN PATENT SPECIFICATION

(11) **EP 2 783 572 B1**
(45) Date of publication and mention of the grant of the patent: **25.10.2017**
(21) Application number: 13001634.8
(22) Date of filing: 28.03.2013
(51) Int. Cl.: A22C 17/04

(54) **A device for separating meat of animal origin from bone**
Vorrichtung zum Trennen von Fleisch tierischer Herkunft von Knochen
Dispositif permettant de séparer la viande d'origine animale des os.

(43) Date of publication of application: 01.10.2014
(73) Proprietor: High Tech Equipamentos Industriais Ltda., 89803-800 Chapecó SC (BR)
(72) Inventor: Maffi, Gerson Luiz, Chapeco SC (BR); Coelho, Amauri, Chapeco SC (BR)
(74) Representative: Meissner Bolte Partnerschaft mbB

(56) References cited:
- US-A- 3 739 994
- US-A- 4 025 001
- US-E- R E33 752

## Description

The present invention relates to a device for separating meat of animal origin.

### Description of the prior art

Obtaining foods of animal origin is one of the main challenges of the food industry. This is because the production processes may not be of long duration, so that they will not have a significant impact on the final cost of the product.

Thus, the devices and processes employed in extracting animal meat from the bones should have a lower and lower extraction cost, coupled with high quality of the product obtained. This is reflected in a necessary asepsis which the product should have.

In this regard, the processes of separating meat from bones have been developed and improved ever since the Fifties. Such separation processes may by either manual or totally mechanized. The concern about the quality of the meat, production cost, efficiency and waste has led to the improvements that exist at present.

One of the most widespread techniques of obtaining a mass of meat of animal origin involves separation of the meat from the respective bones. Usually, there is a pre-treatment of the slaughtered animal prior to said separation, since it is desired to remove elements that may not be employed upon separating the bone from the meat. These undesired elements are usually, feathers, viscera or other components of the animal.

This separation is made with a piece of equipment called meat-and-bone separation machine or deboning machine, which carries out the mechanical separation of meat from bones. One of these types of equipment can be found in publication US 4025001, which presents a meat-and-bone separation machine.

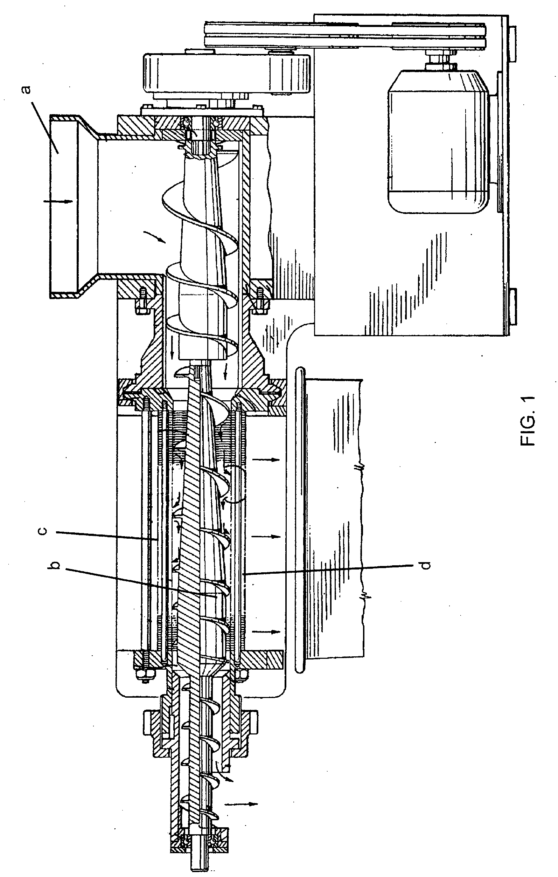

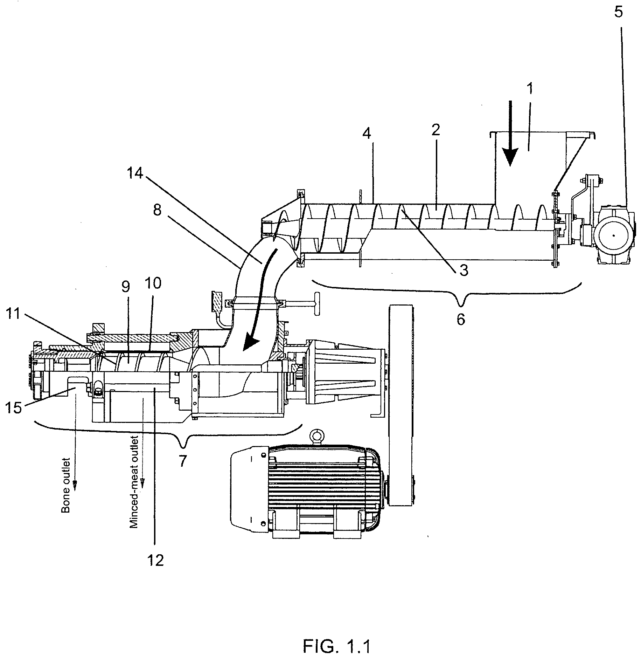

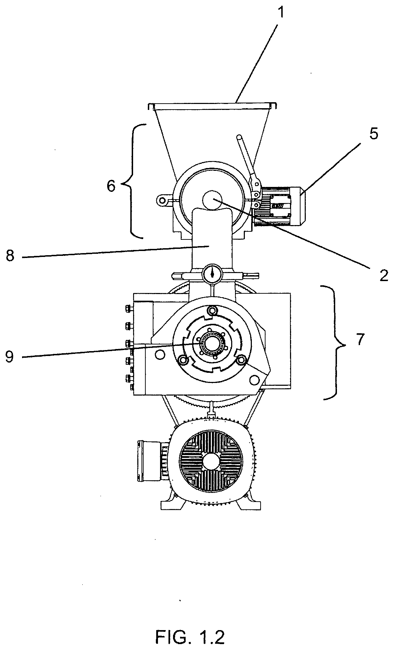

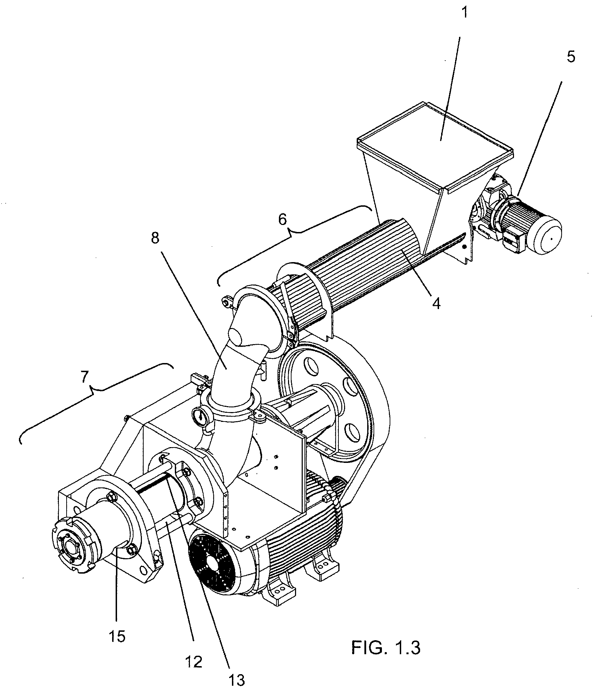

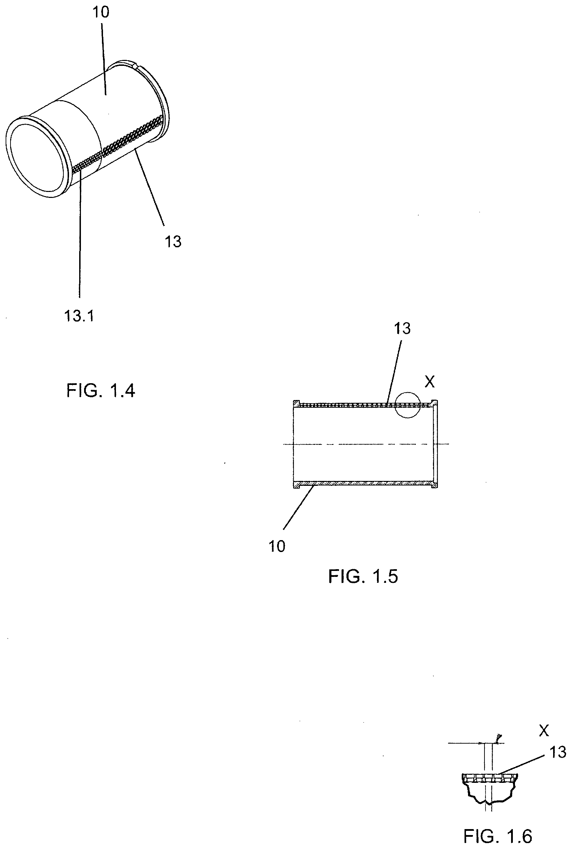

In figure 1, which represents the prior art, more precisely in figure 1 of the above-mentioned publication, one can see a feeding hopper a, a conveyor screw b, a filter c, filter bores d, and a motor for driving the conveyor screw. These are the main and fundamental components of the separation machine of the prior art. It should be noted that, for the sake of clarity, reverence numbers were altered and suppressed.

Thus, one can infer from that document that the bodies of animals to be boned are inserted into the feeding hopper a after the pre-treatment. However, the bodies are with the complete bone structures and the respective meat to be extracted attached to the bones by the body tissues, as for example, tendons. In this way, after inserting the bodies into the feeding hopper a, these bodies are led by gravity to the conveyor screw b, which has the function of transporting/carrying the bodies from a substantial vertical to a horizontal direction.

This transportation by the conveyor screw b takes place by means of rotary movement of the conveyor screw b with respect to the boning machine. Such transportation is possible, because the portion of conveyor screw that has the first contact with the slaughtered animal to be boned has a relatively wide thread pitch. This conveyor screw portion, as can be seen, has the function of transporting and compacting the bodies that adhere to the meat-and-bone separation machine.

Later, when the bodies are already being conducted and compacted, the thread pitch of the conveyor screw undergoes a respective reduction in a second portion. In this way, the bodies contained therein, instead of being only forced in the direction of transportation, which is axial to the conveyor screw a, undergoes a significant radial pressure as well. Therefore, the bodies are pressed against the filter c, which is about the second portion of the conveyor screw a, which has a smaller thread pitch.

The effect of this pressure is the extraction of meat from the body that passes through said filter c. It is noted that only the meat that has a determined texture, composition and fluidity passes through said filter c.

The bones that have been separated from the meat are then led to the end of the conveyor screw b and are disposed of accordingly. On the other hand, the meat that passes through the filter c is employed in the food industry in the most varied types of products that contain meat of animal origin.

In other words, in the known boning processes, mainly those for treating poultry, involve inserting the slaughtered animal into an aperture by action of gravity or by hand, where they are led to the conveyor screw, which is usually driven by an electric motor. Later, one separated the meat from the bones by pressing it against the filter that involves the conveyor screw or a part thereof. Such a filter is provided with grooves or bores that enable the ground meat to pass through it, not the bones, which are larger, less flexible and do not have the physical properties of the meat. At the end of the conveyor screw the non-separated meat and the bones are disposed of accordingly.

Other pieces of equipment of the prior art have the same functioning principle described above, which is the separation of meat from bone of a plurality of bodies of animal origin by means of a conveyor screw that chiefly transports and presses the bodies against a filter having bores through which the meat to be extracted passes.

Examples of this process are found in the following documents: US 4025001, which relates to a device the filter of which has multiple circular plates that engage each other, forming small flexible circular bores. This flexibility facilitates the extraction of the meat and, at the same time, retains parts that contain tendons and bones, since each fraction of meat behaves as a wedge upon passing through a bore, forcing and widening the opening and, at the same time, compressing the opening of immediately adjacent bores.

In this way, bone fragments of sizes that would be exactly small enough to go through the bores do not manage to do so due to the compression of the latter.

Document US-A-3739994 discloses a similar device.

Document MU 4803126, in turn, refers to a device having two identical stages, the first one making first separation of meat from bone, and the second one making an additional separation of meat that is remains attached to the bones. Indeed, waste is minimized and a respective saving is achieved, since one uses only an electric motor to drive both conveyor screws.

On the other hand, document US 4340184 relates to a device having a spring-controlled opening that enables one to control the pressure applied onto the meat, and so it is possible to adjust the machine to different types of meat from various types of animals.

However, in all the above-cited documents and technologies there is a step and transition that takes place in the equipment, namely compression on the conveyor screw responsible for removing the meat from the bones. Thus, the bones invariably undergo shearing and fragmentation due to the pressure applied for axial displacement and subsequent radial displacement on the same conveyor screw. In this regard, these bone particles may be small enough to go through the grooves close to the ground meat, thereby a lower quality product is obtained. If the level of calcium from the bone fragments is too high, the meat is considered unsuitable for consumption and, therefore, disposed of. If the pressure if reduced so as to prevent the bone from breaking, the separation is impaired and, therefore, the amount of meat that remains attached to the bones is larger.

Another drawback of substantial importance relates to the fragmentation which the bones undergo upon being compressed and led in an axial direction and right afterward compressed in the radial direction for extraction of meat. This drawback is the breaking of various tissues of the body by the bones that have been broken, which act as blades on the meat upon movement of the body. The effect of this type of cutting carried out by the bones on the rest of the body is related to a greater contamination of blood throughout the meat contained in said body.

In terms of quality of the product that comes out of the boning machine, this contamination, or better said, longer exposure with blood will not affect the quality of the product itself *a priori.* However, the exposure with blood interferes with the coloring of the meat obtained by the boning equipment.

Further, the bone marrow present inside the bones too is responsible for the contamination thereof. When the bones are broken, the release the bone marrow contained therein, which also makes the meat dark. Although this contamination is not necessarily harmful to the human health, the aspect of the meat is impaired, which may be commercially undesired.

In this regard, depending on the final food product, this coloring may be of significant commercial relevance. This is because in some segments the choice of the product by the consumer is strongly influenced by the color of the meat.

Therefore, the present-day boning pieces of equipment have a number of limitations regarding the food segment that can be applied. Sometimes, for instance, the meat that should exhibit coloring very close to white cannot be obtained by this type of equipment, which, by its functioning nature, influences the coloring of the meat through longer contact with blood from tears made in the meat by the bone structure that has been broken too much in the boning process.

Besides, the known pieces of equipment are come into notice because they enable smaller pieces of meat to remain attached to the bones. Although the percentage of meat that remains attached and is not utilized is low, with respect to each body that passes through the separation process, the total amount of meat that is wasted is significant, which reflects the inefficiency of the items of equipment that are known so far.

### Brief description of the invention

The present invention relates to a device of separating meat of animal bodies that are inserted into the device, which has a conveyor screw assembly that is responsible for separating the meat from the bones of the bodies to be processed.

The present device/equipment, as defined in claim 1, comprises an inlet that is a feeding hopper, through which the bodies are inserted, and there is a conveyor screw assembly, a stator that involves said conveyor screw, which has a filter. This filter is in communication with an outlet of the device, and the stator further communicates with an outlet for bones, wherein between the feed hopper and the conveyor screw assembly there is a forced-feed assembly that feeds said conveyor screw assembly, providing axial displacement of the bodies along the device, without the need for the conveyor screw assembly to cause the displacement of the bodies along the device.

The forced-feed assembly further has the function of compressing the body, so that no excessive force will be exerted. In this way, the conveyor screw assembly is dedicated exclusively to radial displacement of the bodies, so as to provide the necessary separation of meat from bones, which can be achieved with reduced velocity, since the compression has been made before. In this way, the contamination of blood and/or bone marrow in the bodies is quite reduced.

### Brief description of the drawings

The present invention will now be described in greater detail with reference to an example of embodiment represented in the drawings. The figures show:
Figure 1 is a perspective view of a piece of equipment of the prior art;
Figure 1.1 is a front and cross-sectional view of a first embodiment, but not according to the invention;
Figure 1.2 is a side view of a first embodiment, but not according to the invention;
Figure 1.3 is a side view of a first embodiment, but not according to the invention;
Figure 1.4 is a perspective view of a component of the present invention;
Figure 1.5 is a cross-sectional view of a component of the present invention;
Figure 1.6 is a detail view of a component of the present invention;
Figure 2.1 is a front and cross-sectional view of the embodiment according to the invention;
Figure 2.2 is a side view of the embodiment according to the invention;
Figure 2.3 is a top view of the embodiment according to the invention;
Figure 2.4 is a perspective view of the embodiment according to the invention;
Figure 3.1 is a front and cross-sectional view of a third embodiment, but not according to the invention;
Figure 3.2 is a side view of a third embodiment, but not according to the invention;
Figure 3.3 is a front and cross-sectional view of a third embodiment, but not according to the invention;
Figure 3.4 is a top view of a third embodiment, but not according to the invention;
Figure 3.5 is a perspective view of a third embodiment, but not according to the invention.

### Detailed description of the figures

Three variants/embodiments of the present device for separating meat of animal origin will be demonstrated hereinafter. Such a piece of equipment is intended mainly for some specific sectors of the food industry that need rapid, efficient and low-cost removal of meat from the rest of the slaughtered body.

In the above-described prior art, the meat undergoes respective compressions by the conveyor screw, which is unique, the conveyor screw carrying out both the displacement of the bodies along the device and the extraction of the meat proper in radial direction.

Unlike the prior art, the present invention enables the transportation of the meat and by-products within the equipment by other components than the separation device itself. In this way, one prevents the bony structures of the bodies from being broken too much, which results in a meat with a whitish appearance, that is, less contaminated with blood and/or bone marrow, being therefore meat with higher commercial value by virtue of what was set forth above.

In the first embodiment, but not according to the invention, illustrated by figures 1.1 to 1.3, one can see a boning device that comprises a feed hopper 1, into which the bodies to be boned are inserted. Thus, after inserting the bodies into said feed hopper, one can view first conveyor screw 2, which is driven by first motor 5. The first conveyor screw 2 has propellers 3, which have a constant pitch in a larger stretch of the first conveyor screw 2, this conveyor screw 2 being contained in a stator 4, which is a housing that involves said first conveyor screw 2 and which forms a closed compartment, so that the bodies to be boned will remain between the propeller 3 pitches and can be conveyed and pressed in an axial transportation direction. These are the main pieces of equipment that compose the first conveyor screw assembly 6.

Between the first conveyor screw assembly 6 and a second conveyor screw assembly 7, there is a connection tube 8 that forms the outlet of the first conveyor screw 6 and the inlet of the second conveyor screw assembly 7.

The inlet of the second conveyor screw assembly 7, which is formed by the connection tube 8, is responsible for leading the slaughtered animals to be deboned to second conveyor screw 9. Said connection tube 8 receives from the first conveyor screw 6 slaughtered animals that are pressurized inside this tube 8.

It is important to stress that the slaughtered animals that are conveyed to said tube 8 by the conveyor screw 6 are not cut or their boney structure is too broken. This is due to the fact that the pitch and space between the propellers 3, the stator 4 and the first conveyor screw 2 proper are sufficient for pressed accommodation of the slaughtered animals, but without crushing them in an abrupt manner.

In this regard, by leading and conveying the bodies from the first conveyor screw assembly it is possible for the second conveyor screw assembly 7 to receive, at its inlet, through the connection tube 8, a pressed flow of bodies to be deboned. Such a flow is indicated by the arrow 14.

Thus, the feeding in the second conveyor screw assembly 7 is forced, which eliminates the need for the second conveyor screw 9 to have to convey the bodies in the second transportation thereof, that is, the conveyor screw 9 is not responsible for a substantial force so that the bodies will follow to a bone outlet 15 of the present meat-and-bone separation device.

Indeed, the second conveyor screw 9 simply has the main task of moving the bodies to be deboned in a radial direction against a stator 10 that involves said second conveyor screw 9. So, this conveyor screw can turn at a lower speed than would be necessary if it were simultaneously responsible for compressing and conveying the body. This reduced speed, besides saving energy, works against shearing and fragmenting the bones, decreasing substantially the contamination of the meat to be obtained by blood and/or bone marrow.

Therefore, upon actuation of the second conveyor screw 9, which has a substantially reduced space between the stator 10, its propellers 11 and the conveyor screw 9 proper, the bodies that are forced in axial direction toward the bone outlet 15 of the second conveyor screw assembly 7 are also forced radially against the stator 10. Therefore, with a separation filter 13 present on the stator 10, the meat present on the bodies is expelled out of the second conveyer screw assembly 7, thus providing the required and necessary separation of meat from bone of the bodies. It is noted that the separation filter 13 is composed by a number of apertures 13, which can be viewed in greater detail in figures 1.4 to 1.6, through which the meat to be separated from the bodies is expelled.

Thus, by the radial displacement that the second conveyor screw 9 causes on the bodies to be deboned toward the apertures 13, the meat contained therein will flow through these apertures, getting separated from the bones and other connections which it has with the remaining part. Therefore, what has not been expelled through the apertures 13 goes on in axial direction until it reaches the bone outlet 15 for subsequent treatment.

It is stressed that, according to the invention, the apertures 13 have two diameters (shown in the detail X), a smaller one facing the inside of the stator 10 and a larger one facing the outside of said stator 10. In this way, a better separation of meet from the bodies is provided, which prevents undesired parts from mixing with the meat to be obtained by the present meat-and-bone separation device, and still such a configuration enables a relief at the exit of the deboned product, thus preventing undesired clogging of said apertures 13.

However, after the more facilitated extraction of meat from the bodies, since at the beginning of the separation they contains a significant amount of meat, the bodies will gradually lose meat, which will flow through said apertures 13. Therefore, there is still a plurality of bores 13.1 on said stator 10, which have smaller diameters in comparison with the apertures 13, which come into contact with the bodies already in a state in which they have a smaller amount of meat. In this way, it is possible that more good-quality meat (without the presence of undesired fibers or the like) will be extracted by the present device, object of the present invention.

One can further see, with this type of forced feeding of the first conveyor screw assembly 6 to the second conveyor screw assembly 7, that the bodies that will be subjected to the required separation in the second stator 10, undergo short exposure to body blood, since one prevents bone from breaking at the time of conveyance in the axial direction, thus minimizing drastically tears which the fragile boney structures cause to the body tissues.

Therefore, it is possible to obtain, through the separation filter 13 of the stator 10, meat that is virtually free from blood contamination and, as a result, meat with quite clear coloring and having a substantially higher commercial value in comparison with meat having darker coloring.

Some breaded foods that require meat with relative clear color may be manufactured with meat obtained with the present separation device, that is, one may employ meat having a lower production cost in a product that so far received meat from other types of extraction.

It is important to point out, once more, that the main characteristic of the present invention is that there is a forced feeding to the conveyor screw, which in conjunction with a filter or screen, will carry out the extraction of meat of animal origin.

In this regard, it is possible that other conveyer screw assemblies or even other pieces of equipment/devices that carry out a similar task will be employed in order to achieve the necessary forced feeding. In this way, it is possible to see, in the following figures, other examples of embodiment of the present invention, as discussed hereinafter.

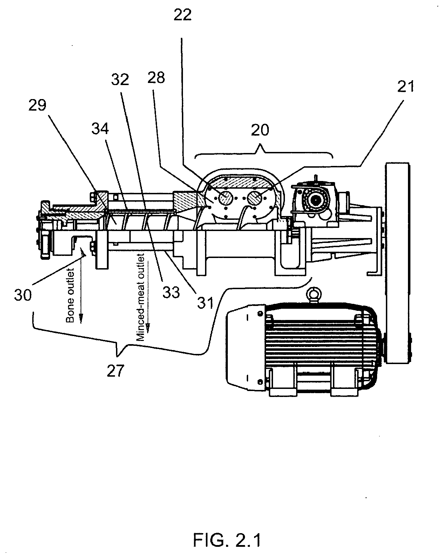

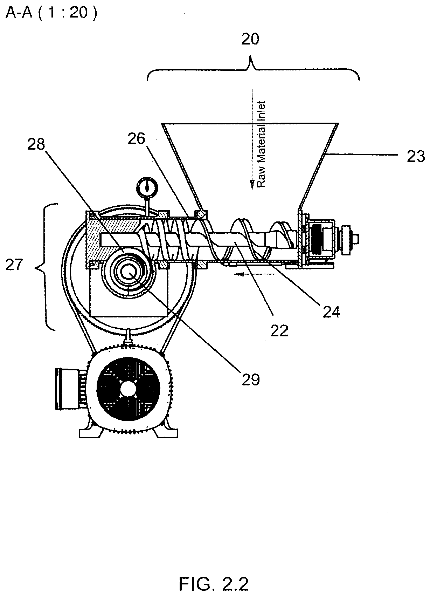

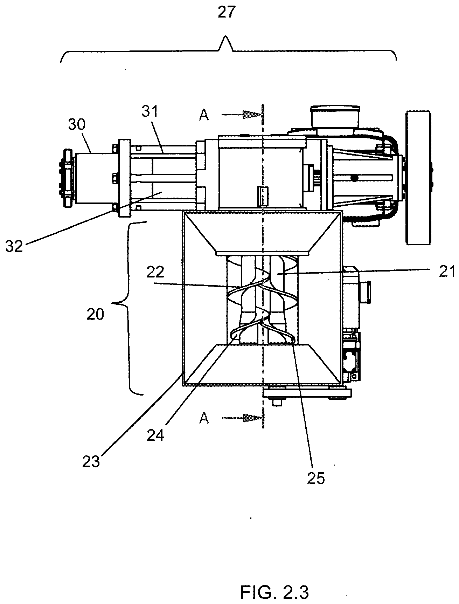

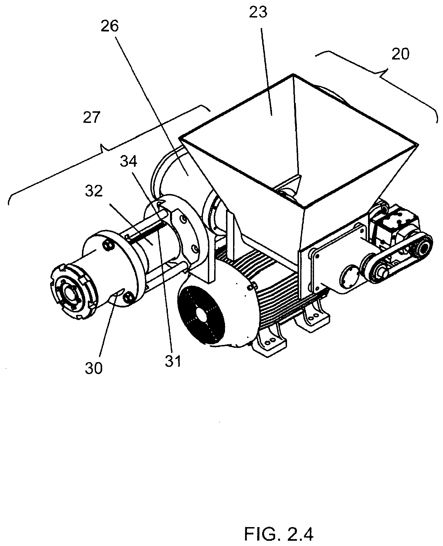

In figures 2.1 to 2.4, one can see a second embodiment, which is according to the present invention. In these figures there is, in a number of views, a meat-and-bone separation device that also has first conveyor screw assembly 20. This assembly 20 is formed by two conveyor screws 21, 22, which are driven/moved by an electric motor.

The movements of the conveyor screws 21, 22 are in opposite direction, so that the bodies to be deboned, upon entering into a feeding hopper 23 by gravity, will remain on the conveyor screws 21, 22 until the respective body gets into the spaces existing between the two conveyor screws 21, 22, formed by the respective propellers 24, 25. After the bodies begin to be displaced/transported in an axial direction with respect to said conveyor screws 21, 22, they get into a stator 26 that houses respective portions of the conveyor screws 21, 22.

Thus, the confined bodies that are being displaced in an axial direction are then compacted and pressed between the propellers 24, 25 of the conveyor screws 21, 22 and the stator 26. In this way, such a compression is sufficient for the bodies to get into a second conveyor screw assembly 27 in a forced manner. One should observe that such a compression is not significant to the point of breaking the body bones too much, thus damaging substantially the coloring of the meat due to contamination by blood and/or bone marrow.

In this embodiment, the interface between the first conveyor screw assembly 20 and the second conveyor screw assembly 27 takes place by means of the stator 26 itself present on said conveyor screw 20. The outlet 28 of the stator 26 is the inlet of the second conveyor screw assembly 27, into which the bodies get in a forced and compressed manner, thus providing the necessary displacement of the conveyor screws in axial direction.

One should observe that the conveyor screws 21, 22 of the first conveyor screw assembly 20 are in a perpendicular position with respect to a conveyor screw 29 of the second conveyor screw assembly 27. This arrangement aims to facilitate the interface of the first and second conveyor screws 20, 27 through said outlet 28.

After the bodies receive the respective pressing for axial displacement, they also change conveyance direction within the meat-and-bone separation device by 90 degrees, following the direction provided by the conveyor screws 24, 25 and 29 present there.

Upon being forced toward the outlets 30, 31, the bodies pass through the conveyor screw 29, which provides radial displacement thereof against a stator 32 that involves the conveyor screw 29. Since the compression has already been carried out, the turn velocity or rotation of the conveyor screw 29 is reduced in comparison with what would be necessary if it were responsible for both compression and conveyance. In this way, besides saving energy, the break of bones is substantially reduced, which results in a substantially lower contamination by blood and /or bone marrow.

Therefore, upon actuation of the conveyor screw 29, which has a substantially reduced space between the stator 32, its propellers 33 and the conveyor screw 29 proper, the bodies that are forced in axial direction toward the outlets 30, 31 of the second conveyor screw 29 are also forced in radial direction against the stator 32. In this way, with the presence of a separation filter 34 on the stator 32, the meat present on the bodies is expelled out of the second conveyor screw 27, which provides the required and necessary separation of meat from bones.

Indeed, the separated meat passes through the outlet 31, and the rest of the body composed by tendons, nerves, undesired cartilages or bones passes through the outlet 30, and both will have respective treatments later.

From the above, one can see that it is possible to achieve different embodiments so that the conveyer screw will receive the bodies to be deboned in a forced manner, which contributes - as already said - to obtain a meat with clearer coloring.

Further, it is possible to observe, in a third embodiment, but not according to the invention, that the forced feeding to the conveyor screw assembly is not necessarily achieved by means of conveyor screws, since other similar pieces of equipment can carry out the necessary pressing of the bodies for a forced feeding of the conveyor screw that will carry out the separation of the meat proper.

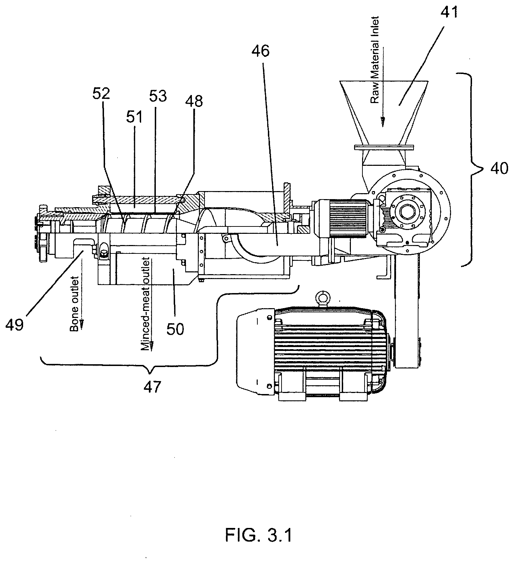

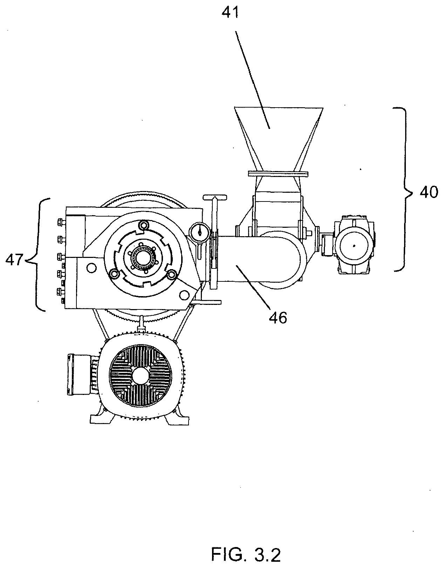

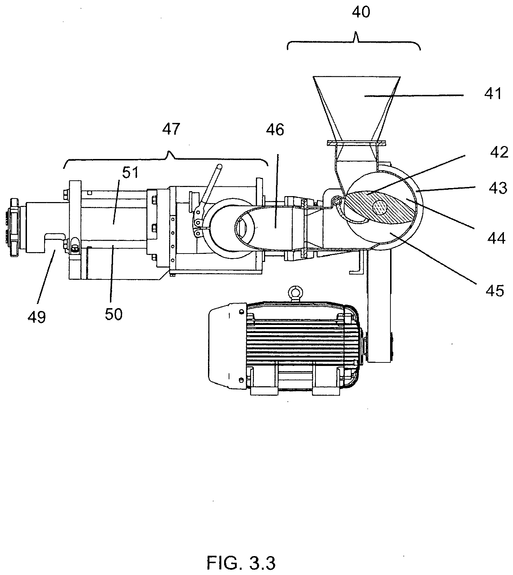

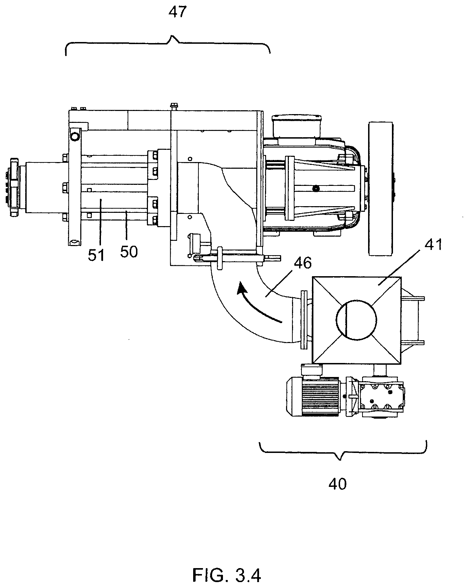

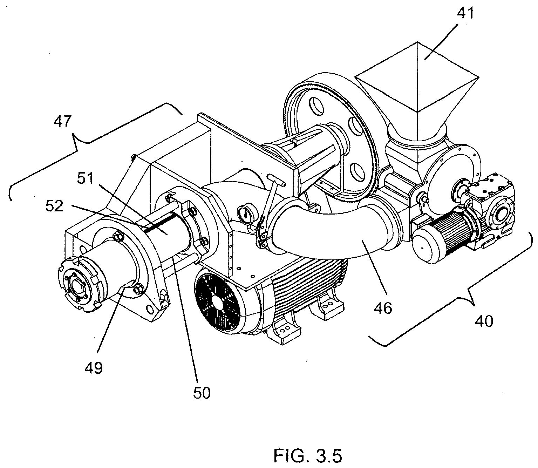

Such a statement can be verified by means of this third embodiment, but not according to the invention, represented in figures 3.1 to 3.5, in which not the first conveyor screw assembly, but rather a rotor 40 assembly is present. This rotor assembly 40 is fed with slaughtered animals that are inserted through the feed hopper 41 and drop by gravity to a rotor 42 that is driven by an electric motor. This rotor 42 subdivides a stator 43, which contains it in two chambers 44 and 45 that, during the operation, will be alternatively receiving bodies from the feeding hopper 41 or sending pressurized/pressed bodies toward a connection tube 46 due to the movement that the rotor 42 receives from an electric motor.

Thus, the pressurized bodies are fed in a forced manner by the rotor assembly 40 to a conveyor screw assembly 47, which in turn has, as an inlet, the connection tube 46, which leads the bodies to be deboned to the conveyor screw 48.

Therefore, the feeding of the conveyor screw 47 is obviously forced, which eliminates the need for the conveyor screw 48 to have to provide conveyance of the bodies in the direction of transportation thereof, that is, the conveyor screw 48 is not responsible for a substantial force so that the bodies will follow to the outlets 49, 50 of the present meat-and-bone separation device.

Indeed, the conveyor screw 48 simply has the main task of moving the bodies to be deboned in radial direction against a stator 51 that involves the second conveyor screw 48. Since the compression has already been carried out, the turn velocity or rotation of the conveyor screw 29 is reduced in comparison with what would be necessary if it were responsible for both compression and conveyance. In this way, besides saving energy, one reduces the break of bones substantially, which results in a substantially smaller contamination by blood and/or bone marrow.

Therefore, upon actuation of the conveyor screw 48 that has s substantially reduced space between the stator 51, its propellers 52 and the conveyer screw 48 proper, the bodies that area forced in axial direction to the outlets 49, 50 of the conveyor screw assembly 47 are also forced radially against the stator 51. Therefore, with the presence of a separation filter on the stator 51, the meat present on the bodies is expelled out of the conveyor screw 47, which provides the required and necessary separation of meat from bones.

As can be seen from the foregoing, the three embodiments have, respectively, first conveyor screw assembly 6, second conveyor screw assembly 20 and a rotor assembly 40 to compress and convey, in a controlled manner, the bodies to be deboned. Such assemblies may also have different pieces of equipment to carry out the forced feeding. In this way, these assemblies may be described as forced feeding assembly 6, 20, 40, which feed a conveyor screw assembly 7, 27, 47 for carrying out the necessary deboning.

Finally, it is important to point out that the forced feeding preferably generates a feeding pressure that may range from 1 to 8 kgf/cm², which will depend on production factors, the type of slaughtered animal to be deboned and other factors to be implemented by the operator of the device of the present invention.

Preferred examples of embodiment having been described, one should understand that the scope of the present invention embraces other possible variations, being limited only by the contents of the accompanying claims, which include the possible equivalents.

## Claims

1. A device of separating meat of animal origin from bones, which comprises a conveyor screw assembly (27) comprising a feed hopper (23), a conveyor screw (29), a stator (32) involving said conveyor screw (29), which has a filter (34) that is in communication with an outlet (31), the stator (32) further communicating with a bone outlet (30),wherein, between the feed hopper (23) and the conveyor screw assembly (27), there is a force-feed assembly that feeds said conveyor screw assembly, **characterized in that** the forced-feed assembly (20) comprises two conveyor screws (21, 22), which feed said conveyor screw assembly (27), wherein the conveyor screws (21, 22) of the forced feed assembly (20) are in a position substantially perpendicular to the conveyor screw (29) of the second conveyor screw assembly (27).

2. The device of separating meat of animal origin from bones, according to claim 1, **characterized in that** a connection tube communicates the forced-feed assembly (20) and the conveyor screw assembly (27).

3. The device of separating meat of animal origin from bones, according to any one of the preceding claims, **characterized in that** the stator (32) has a separation filter (34).

4. The device of separating meat of animal origin from bones, according to claim 3, **characterized in that** the separation filter (34) is composed by apertures.

5. The device of separating meat of animal origin from bones, according to claim 4, **characterized in that** the apertures have two diameters, a smaller one facing the inside of the stator (32) and a larger one facing the outside of the stator (32).

6. The device of separating meat of animal origin from bones, according to any one of the preceding claims, **characterized in that** the two conveyor screws (21, 22) of the force-feed assembly (20) move in opposite directions.

## Patentansprüche

1. Vorrichtung zum Trennen von Fleisch tierischen Ursprungs von Knochen, die eine Förderschneckenbaugruppe (27) umfasst, umfassend einen Zufuhrtrichter (23), eine Förderschnecke (29), einen Stator (32), der die Förderschnecke (29) einbindet und der einen Filter (34) aufweist, das in Verbindung mit einem Auslass (31) steht, wobei der Stator (32) ferner in Verbindung mit einem Knochenauslass (30) steht, wobei zwischen dem Zufuhrtrichter (23) und der Förderschneckenbaugruppe (27) eine Druckzuführbaugruppe angeordnet ist, die die Förderschneckenbaugruppe versorgt, **dadurch gekennzeichnet, dass** die Druckzuführbaugruppe (20) zwei Förderschnecken (21, 22) umfasst, die die Förderschneckenbaugruppe (27) versorgen, wobei sich die Förderschnecken (21, 22) der Druckzuführbaugruppe (20) in einer Stellung im Wesentlichen senkrecht auf die Förderschnecke (29) der zweiten Förderschneckenbaugruppe (27) befinden.

2. Vorrichtung zum Trennen von Fleisch tierischen Ursprungs von Knochen gemäß Anspruch 1, **dadurch gekennzeichnet, dass** ein Verbindungsrohr die Druckzuführbaugruppe (20) und die Förderschneckenbaugruppe (27) verbindet.

3. Vorrichtung zum Trennen von Fleisch tierischen Ursprungs von Knochen gemäß einem der vorstehenden Ansprüche, **dadurch gekennzeichnet, dass** der Stator (32) einen Trennfilter (34) aufweist.

4. Vorrichtung zum Trennen von Fleisch tierischen Ursprungs von Knochen gemäß Anspruch 3, **dadurch gekennzeichnet, dass** der Trennfilter (34) aus Öffnungen zusammengesetzt ist.

5. Vorrichtung zum Trennen von Fleisch tierischen Ursprungs von Knochen gemäß Anspruch 4, **dadurch gekennzeichnet, dass** die Öffnungen zwei Durchmesser aufweisen, einen kleineren, der zu dem Innenraum des Stators (32) zeigt, und einen größeren, der zu dem Äußeren des Stators (32) zeigt.

6. Vorrichtung zum Trennen von Fleisch tierischen Ursprungs von Knochen gemäß einem der vorstehenden Ansprüche, **dadurch gekennzeichnet, dass** sich die beiden Förderschnecken (21, 22) der Druckzuführbaugruppe (20) in entgegengesetzte Richtungen bewegen.

## Revendications

1. Dispositif pour séparer la viande d'origine animale des os, qui comprend un ensemble transporteur à vis sans fin (27) comprenant une trémie d'alimentation (23), un transporteur à vis (29), un stator (32) enveloppant ledit transporteur à vis (29), qui comporte un filtre (34) qui est en communication avec une sortie (31), le stator (32) communiquant en outre avec une sortie des os (30),
dans lequel, entre la trémie d'alimentation (23) et l'ensemble transporteur à vis sans fin (27), il y a un ensemble d'alimentation forcée qui alimente ledit ensemble transporteur à vis,
**caractérisé en ce que** l'ensemble d'alimentation forcée (20) comprend deux transporteurs à vis (21, 22), qui alimentent ledit ensemble transporteur à vis (27), dans lequel les transporteurs à vis (21, 22) de l'ensemble d'alimentation forcée (20) sont dans une position sensiblement perpendiculaire au transporteur à vis (29) du second ensemble transporteur à vis (27).

2. Dispositif pour séparer la viande d'origine animale des os selon la revendication 1, **caractérisé en ce qu'**un tube de raccordement fait communiquer l'ensemble d'alimentation forcée (20) et l'ensemble transporteur à vis (27).

3. Dispositif pour séparer la viande d'origine animale des os selon l'une quelconque des revendications précédentes, **caractérisé en ce que** le stator (32) comporte un filtre de séparation (34).

4. Dispositif pour séparer la viande d'origine animale des os selon la revendication 3, **caractérisé en ce que** le filtre de séparation (34) est composé d'ouvertures.

5. Dispositif pour séparer la viande d'origine animale des os selon la revendication 4, **caractérisé en ce que** les ouvertures ont deux diamètres, un plus petit tourné vers l'intérieur du stator (32) et un plus grand tourné vers l'extérieur du stator (32).

6. Dispositif pour séparer la viande d'origine animale des os selon l'une quelconque des revendications précédentes, **caractérisé en ce que** les deux transporteurs à vis (21, 22) de l'ensemble d'alimentation forcée (20) bougent dans des directions opposées.
